# EUROPEAN PATENT SPECIFICATION

(11) **EP 3 123 758 B1**
(45) Date of publication and mention of the grant of the patent: **12.02.2020**
(21) Application number: 15741808.8
(22) Date of filing: 24.03.2015
(51) Int. Cl.: H04W 12/10, H04W 12/06, H04L 9/32, H04L 9/08, H04W 84/04, H04W 4/029, H04L 29/06, H04W 4/02

(54) **USER EQUIPMENT PROXIMITY REQUESTS AUTHENTICATION**
AUTHENTIFIZIERUNG VON PROXIMITÄTSANFRAGEN EINER BENUTZERVORRICHTUNG
AUTHENTIFICATION DE REQUÊTES DE PROXIMITÉ POUR ÉQUIPEMENT UTILISATEUR

(30) Priority: 24.03.2014 GB 201405212
(43) Date of publication of application: 01.02.2017
(73) Proprietor: Vodafone IP Licensing Limited, London W2 6BY (GB)
(72) Inventor: BABBAGE, Steven, London W2 6BY (GB); BARRY, Aguibou, London W2 6BY (GB)
(74) Representative: Boult Wade Tennant LLP
(86) International application number: PCT/EP2015/056300
(87) International publication number: WO 2015/144728

(56) References cited:
- "3rd Generation Partnership Project; Technical Specification Group Services and System Aspects; Study on architecture enhancements to support Proximity-based Services (ProSe) (Release 12)", 3GPP STANDARD; 3GPP TR 23.703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V2.0.0, 10 March 2014 (2014-03-10), pages 1-324, XP050769634, [retrieved on 2014-03-10]
- "3rd Generation Partnership Project; Technical Specification Group Services and System Aspects Study on security issues to support Proximity Services (Release 12)", 3GPP STANDARD; 3GPP TR 33.833, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V0.4.0, 24 February 2014 (2014-02-24), pages 1-73, XP050769419, [retrieved on 2014-02-24]
- "Digital cellular telecommunications system (Phase 2+); Universal Mobile Telecommunications System (UMTS); LTE; 3G security; Network Domain Security (NDS); IP network layer security (3GPP TS 33.210 version 11.4.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 3, no. V11.4.0, 1 October 2012 (2012-10-01), XP014075726,
- SAMSUNG: "Security Aspects of ProSe Direct Discovery", 3GPP DRAFT; S3-131041-PROSE-REPLAYATTCK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. San Francisco; 20131111 - 20131115 4 November 2013 (2013-11-04), XP050765938, Retrieved from the Internet: URL:http://www.3gpp.org/ftp/tsg_sa/WG3_Sec urity/TSGS3_73_SanFrancisco/Docs/ [retrieved on 2013-11-04]

## Description

### Technical Field of the Invention

The invention provides any individual or combination of: an Application Server; a Proximity Service Function for a cellular network; and a User Equipment. A method of handling a Proximity Request within a cellular network is also provided.

### Background to the Invention

The Third Generation Partnership Project (3GPP) have been developing enhancements to cellular systems to allow their operation for public safety communications. A significant part of these developments concerns proximity-based services, known as ProSe. A number of documents have been agreed within this process, including Technical Report (TR) 23.703 and Technical Specification (TS) 23.303.

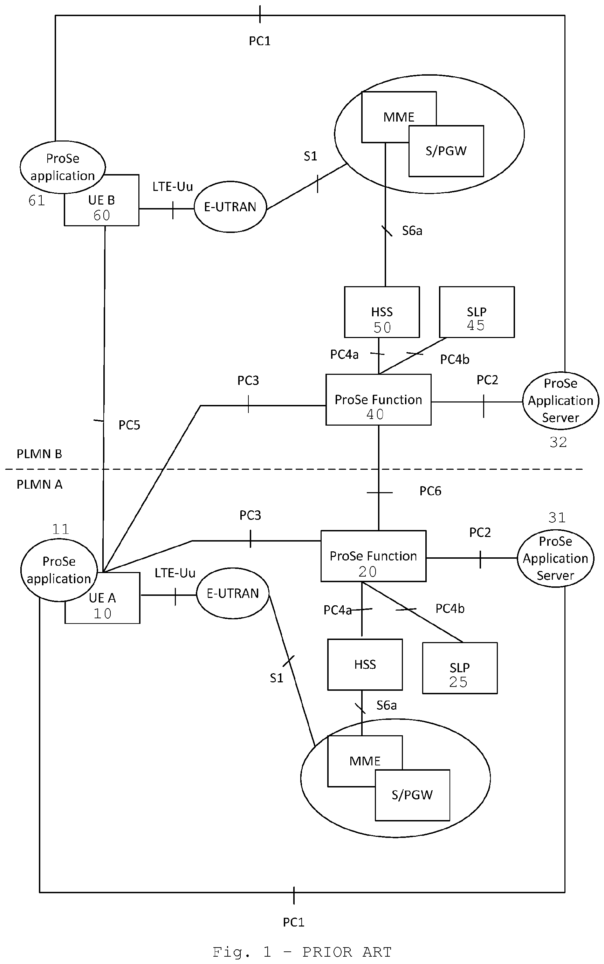

TS 23.303 v.12.0.0 discusses the functionality to enable a proximity request to be made and fulfilled. This is when a first User Equipment (UE) requests information about the proximity of a second UE to it. A number of different scenarios are described, including the case where the two UEs each belong to a different Public Land Mobile Network (PLMN). Referring first to Figure 1, there is shown a schematic diagram of an existing reference architecture with the network entities and interfaces used to provide this functionality.

The first UE (UE A) 10 is in a first PLMN (PLMN A). A second UE (UE B) 60 is in a second PLMN (PLMN B). Each UE operates a ProSe application, UE A 10 operating a Prose application 11 and UE B 60 operating a Prose application 61. The interface between the UE A 10 and UE B 60 is termed PC5 (each interface being defined by a respective reference point). The PLMN A has a first ProSe function 20 and the PLMN B has a second ProSe function 40, with an interface between the first ProSe function 20 and the second ProSe function 40 being termed PC6. Where the UE A 10 is roaming, there also exists a PC7 interface (not shown) between a Prose function in the PLMN in which the UE A 10 is roaming (PLMN C) and the first ProSe function 20 in PLMN A.

The first ProSe function 20 has an interface PC4a with a first Home Subscriber Server (HSS) and an interface PC4b with a first Secure User Plane Location (SUPL) Location Platform (SLP) 25. Similarly, the second ProSe function 40 has an interface PC4a with a second HSS and an interface PC4b with a second SLP 45. The first ProSe function 20 has an interface PC2 with a first ProSe Application Server (AS) 31 and the second ProSe function 40 has an interface PC2 with a second ProSe AS 32. The PC2 interface is used to define the interaction between the ProSe Application Server 32 and ProSe functionality 40 provided by the 3GPP EPS via ProSe Function (for example, name translation) for EPC-level ProSe discovery. Both the first ProSe function 20 and the second ProSe function 40 have interfaces PC3 with the UE A 10.

Each UE has an Application Layer User ID (ALUID), which will be the identifier used at each UE for itself. The UE will also use the ALUID of any other UE for which it wishes to make a proximity request. Separately, each UE has an associated Evolved Packet Core (EPC) ProSe User ID (EPUID), which uniquely identifies the UE registered for ProSe and is allocated by the ProSe function. An Application server (such as the first AS 31 and second AS 32) is the entity that discloses the EPUID of a particular target UE to a ProSe Function, when provided with the ALUID for that UE. This allows the ProSe Function to send a request to another Prose Function, managing that target UE, for the target UE's location information for a particular period of time.

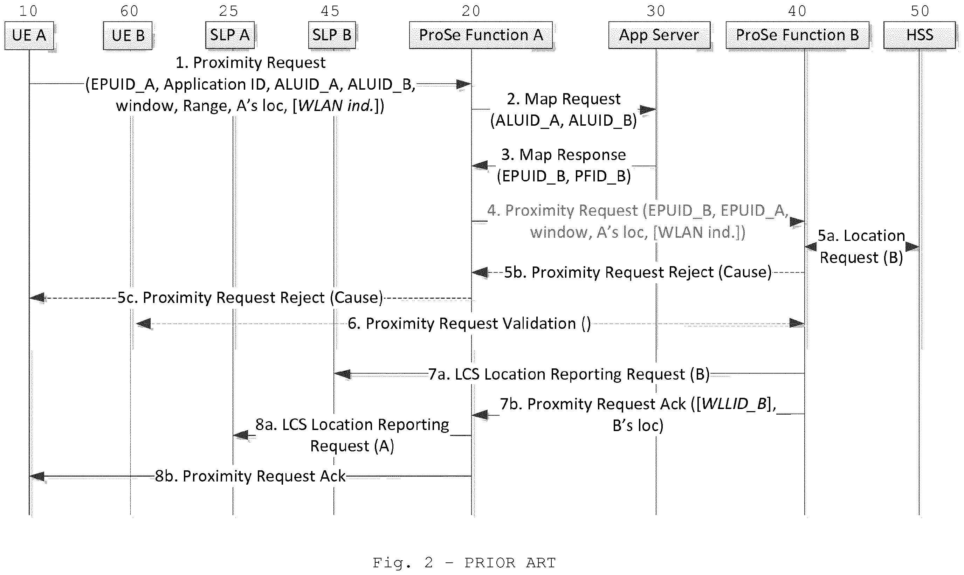

Referring to Figure 2, there is shown a schematic diagram of the messages communicated for a proximity request to be effected in a known way. This is based on Figure 5.5.5-1 of 3GPP TS 23.303 v.12.0.0. Where the same features as shown in Figure 1 have been used, identical reference numerals have been employed. Whilst Figure 1 shows two Application Servers, this drawing shows a single Application Server 30, which will be responsible for managing the proximity request on behalf of UE A 10.

A full description of the messages sent can be found in section 5.5.5 of 3GPP TS 23.303 v.12.0.0. In brief, the following summary is provided though. The proximity request message 1 is sent from the UE A 10 to the ProSe Function A 20, identifying the ALUID for UE A 10 and the ALUID for UE B 60. It also identifies the Application Server 30 (using the Application ID field) to be used. The Map Request message 2 is then sent from the ProSe Function A 20 to the Application Server 30, identifying the ALUID for UE B 60 and the Application Server 30 sends a Map Response message 3, with the EPUID for UE B 60. This can then be provided by ProSe Function A 20 to ProSe Function B 40 in a second Proximity Request message 4, which can be used to request the location for UE B 60.

Typically, the Prose Function A 20 will only act in response to a genuine Proximity Request message 1 from UE A 10. However, no mechanism currently exists to ensure that the ProSe Function A 20 of the initiating PLMN A, which sends a proximity request for the target UE B 60 to the Prose Function 3 40 (over the FC6 or FC7 interface) has been requested by the UE A 10 of the initiating PLMN A.

3GPP TR 33.833 is a technical report on security issues to support proximity services (for release 12).

Proximity requests can provide location information about a UE that is outside the PLMN making the request. As a result, they provide powerful functionality and it is desirable to prevent their abuse. Achieving this without causing significant disruption or adding major complexity to the system is a challenge though.

### Summary of the invention

Against this background and in a first aspect, there is provided an Application Server (AS) for interfacing with a cellular network in line with claim 1. This comprises: a proximity service function interface, configured to receive a Map Request from a first Proximity Service Function on behalf of a first User Equipment, UE; and security logic, configured to authenticate the Map Request and, if the Map Request is authenticated, to communicate a Map Response to the first Proximity Service Function.

The AS therefore acts as an authentication system for checking that the Map Request is genuine. In particular, the AS may authenticate that the Map Request originates from a Proximity Request by the first UE. It is advantageous for the AS to do the authentication, since it communicates directly with the ProSe function making the proximity request and therefore is well placed to check that the ProSe function is not abusing the functionality without causing significant difficulties to the system. The Map Request is typically used to provide a first identifier (such as an ALUID) for a second UE (which is to be the target of the proximity request). The Map Response is normally used to provide a second identifier (such as an EPUID) for the second UE, the second identifier generally being used to allow the Proximity Request to proceed. The Map response may also identify a second Proximity Service Function associated with the second UE (typically the ProSe Function in the PLMN of the second UE), which may be termed a PFID. Typically, each PLMN will have at least one respective ProSe Function.

A risk in the existing technique for a Proximity Request is that just one Proximity Request from the UE will allow a ProSe Function to keep a record of [ALUID_B, EPUID_B, PFID_B] mapping (that is, for the target, second UE) and have the capability to send a Proximity Request later (as described in step 4 of the Proximity Request procedure of section 5.5.5 of 3GPP TS 23.303 v.12.0.0). This may be possible even though the UE did not actually send a proximity request. This could lead to significant tracking of users by other PLMNs that may be very difficult to detect by the PLMN which serves particular ProSe UEs. Authentication of the Map Request at the AS (or one of the other authentications described herein or a combination thereof) may help to address this issue.

The approach taken therefore makes a number of assumptions. Firstly, it is noted that no trust is given that a ProSe Function located in a different PLMN will not issue a proximity request for the purpose of tracking a particular ALUID. Even with Service Level Agreements, such trust may be difficult to establish. Moreover, we need not assume that the application server will always be located in the same PLMN of the requesting ProSe Function. In fact, the application server may be under control of a public safety organisation or a consumer third party service provider. Hence, it need not necessarily be a Mobile Network Operator-hosted or owned service. Finally, if the Application server is located outside a PLMN, it should be established whether the ProSe Function in charge of a particular EPUID, should check that an incoming proximity request is being genuinely requested by a particular UE, not the ProSe Function ALUID. Although the AS carries out this checking, the ProSe Function can carry out some further checking, as will be discussed herein.

There are various ways that the AS can authenticate the Map Request. One approach, not in accordance with the invention, works as follows. The AS may further comprise a User Equipment interface, configured to establish a cryptographic key (which may comprise one or both of: a signature key; and a verification key) with the UE, prior to receiving the Map Request. The signature key may be stored at the UE and the verification key stored at the AS. Then, the Map Request may further comprise a cryptographic signature from the UE. The security logic may be configured to authenticate the Map Request by validating the cryptographic signature using the established cryptographic key (usually the verification key). If the established cryptographic key can be used to validate the cryptographic signature sent with (as part of) the Map Request, the Map Request may be deemed genuine. The security logic may be further configured to communicate at least part of the established cryptographic key (such as a certification key) with the Map Response.

In an approach in line with the invention (which is optionally combined with the first approach), the security logic is configured to check for suspicious characteristics of the Map Request. For example, the security logic may be configured to authenticate (that is, check for suspicious characteristics of) the Map Request on the basis of one or more of: previous Map Requests received from the first Proximity Service Function (for example, in respect of one or more of their number, frequency or content); and a presence detection for the UE at the Application Server. The latter may use an interface between the AS and the first ProSe function, such as the PC2 interface.

Particularly in this second approach, the security logic may be further configured to determine that at least one operation should be authorised for the Proximity Service Function. Moreover, the security logic may be configured to send an indication of this together with the Map Response. Then, the security logic may be further configured to determine at least one authorised operation for the Proximity Service Function. In this case, the security logic may be configured to send an indication of the at least one authorised operation together with the Map Response.

In the invention, the security logic is further configured to generate an Application Server cryptographic signature using an established cryptographic key (which may comprise one or both of: a signature key; and a verification key) and to communicate the Application Server cryptographic signature together with the Map Response. The established cryptographic key is established at the AS. The security logic may be further configured to communicate at least part of the established cryptographic key (such as a certification key) with the Map Response.

Thus, the first approach, not in line with the invention, uses a cryptographic (encryption) key established between the first UE and the AS and the invention uses a cryptographic (encryption) key established at the AS. Both approaches employ a cryptographic signature using the established cryptographic key as a token for subsequent security purposes. The approaches can also be combined, as noted above. The proximity service function interface may be further configured to receive a Key Fetching Request from a second Proximity Service Function. The proximity service function interface may then send at least part of the established cryptographic key (such as the verification key) to the second Proximity Service Function in response to the received Key Fetching Request.

In a second aspect, there is provided a Proximity Service Function for a cellular network in accordance with claim 6. This comprises: a User Equipment interface, configured to receive a first Proximity Request from a first User Equipment, UE; an Application Server interface, configured to send a Map Request to an Application Server, in response to the received first Proximity Request and to receive a Map Response from the Application Server; and a Proximity Service Function interface, configured to send a second Proximity Request to another Proximity Service Function based on the first Proximity Request and the Map Response, the second Proximity Request comprising (or including) a cryptographic signature that is based on the first Proximity Request to allow the other Proximity Service Function to authenticate the second Proximity Request.

The Proximity Service Function may therefore be configured to communicate with: a first UE (in order to receive the Proximity Request comprising a first identifier for a second, target UE); an AS (in order to convert the first identifier for the second UE into a second identifier for the second UE); and another Proximity Service Function (in order to pass on the Proximity Request and thereby receive location information for the second UE). Importantly, the communication with the other Proximity Service Function includes a cryptographic signature that is based on the Proximity Request. This may allow the other Proximity Service Function to authenticate the Proximity Request in an efficient way.

As with the first aspect, there are a number of approaches for obtaining the cryptographic signature. In a first approach, not in line with the invention, the User Equipment interface is configured to receive a UE cryptographic signature from the first UE. Then, the Application Server interface may be further configured to send the UE cryptographic signature to the Application Server. The second Proximity Request sent by the Proximity Service Function interface may comprise the UE cryptographic signature. In this approach, the User Equipment interface may be further configured to receive a cryptographic key from the User Equipment. Then, the Proximity Service Function interface may be further configured to send the cryptographic key to the other Proximity Service Function.

In the invention (which may be combined with the first approach), the Application Server interface is further configured to receive an Application Server cryptographic signature from the Application Server. Then, the second Proximity Request sent by the Proximity Service Function interface comprises the Application Server cryptographic signature. In this approach, the Application Server interface may be further configured to receive a cryptographic key from the Application Server. Then, the Proximity Service Function interface may be further configured to send the cryptographic key to the other Proximity Service Function.

In a third aspect (which may be combined with the second aspect), there is provided a Proximity Service Function for a cellular network in accordance with claim 9. This comprises: a Proximity Service Function interface, configured to receive a Proximity Request from another Proximity Service Function on behalf of a first User Equipment, UE, the Proximity Request comprising a cryptographic signature; and security logic, configured to validate the cryptographic signature and authenticate the received Proximity Request thereby. Thus, the Proximity Service Function may be configured to authenticate a received Proximity Request from another Proximity Service Function (which will typically come from another PLMN) using the received cryptographic signature. This is an efficient way to authenticate the Proximity Request without causing disruption to the Proximity Request procedure.

The Proximity Request identifies an Application Server associated with the Proximity Request. The Proximity Service Function further comprises: an Application Server interface, configured to send a Key Fetching Request to the identified Application Server, in response to the received Proximity Request and to receive a cryptographic key from the Application Server in response. Then, the security logic is configured to validate the cryptographic signature using the received cryptographic key.

Preferably, the Proximity Service Function interface is further configured to send a Proximity Request Acknowledgement to the other Proximity Service Function in response to the security logic authenticating the received Proximity Request. The Proximity Request Acknowledgement may comprise a location for a second UE, the second UE being identified in the Proximity Request.

Ancillary to the invention, there may also be considered a User Equipment (UE) for a cellular network, comprising: a Proximity Service Function interface, configured to send a Proximity Request to a Proximity Service Function of the cellular network, the Proximity Request comprising a cryptographic signature for the UE. In this way, the Proximity Request can be authenticated within the cellular network. This corresponds with the first approach taken in authentication within the first and second aspects.

Beneficially, the Proximity Request identifies an Application Server associated with the Proximity Request. Then, the UE may further comprise: an Application Server interface, configured to establish a cryptographic key with the identified Application Server prior to sending the Proximity Request. The cryptographic key is advantageously used to compute the cryptographic signature.

Any combination of each of the first, second and third aspects is also provided, particularly as a system. Each of the first, second and third aspects may comprise hardware (such as communication equipment, digital logic, a processor system), firmware, software of a combination thereof. Each of the first, second and third aspects may be termed a network entity or a part of a network entity in a general way.

In a fourth aspect, there is provided a method of handling a Proximity Request within a cellular network in line with claim 10. This comprises: communicating a Map Request from the Proximity Service Function to an Application Server, in response to a first Proximity Request on behalf of a first User Equipment, UE; and communicating a Map Response from the Application Server to the Proximity Service Function, in response to the Map Request. The Response comprises a cryptographic signature to allow authentication of the first Proximity Request. Thus, this may describe the process that takes place at the network entity of the first or second aspects.

In the preferred embodiment, the method further comprises: communicating the first Proximity Request from the first User Equipment to the first Proximity Service Function of the cellular network. The step of receiving the Map Response from the Application Server is preferably in response to the Application Server authenticating the Map Request.

Not in line with the invention, the Map Request comprises a cryptographic signature from the first UE. Then, the step of communicating the Map Request may comprise communicating the cryptographic signature from the Proximity Service Function to the Application Server.

In accordance with the invention, the Map Response comprises a cryptographic signature from the Application Server. Then, the step of communicating the Map Response may comprise communicating the cryptographic signature from the Application Server to the Proximity Service Function. In embodiments, the method may further comprise: communicating a second Proximity Request from the first Proximity Service Function to a second Proximity Service Function based on the first Proximity Request and the Map Response.

Not in line with the invention, the method further comprises: establishing a cryptographic key with the Application Server prior to communication of the first Proximity Request, the cryptographic key being used to compute the cryptographic signature. The first Proximity Request may identify the Application Server.

The second Proximity Request may comprise the cryptographic signature from the Application Server (optionally with the cryptographic signature from the first UE) .

This method may optionally comprise process features corresponding with functionality discussed herein for any one or more of the first, second and third aspects. In a yet further aspect, a computer program is provided, configured to carry out any method disclosed herein when operated by a processor.

The combination of any structural, apparatus, system or method features and aspects is also provided even if not explicitly disclosed.

### Brief Description of the Drawings

The invention may be put into practice in various ways, a number of which will now be described by way of example only and with reference to the accompanying drawings in which:
Figure 1 shows a schematic diagram of an existing reference architecture with the network entities and interfaces used to provide Proximity Request functionality;
Figure 2 shows a schematic diagram of the messages communicated for a proximity request to be effected in an known way using the architecture shown in Figure 1;
Figure 3 schematically illustrates the messages communicated for a proximity request to be effected in an example not in accordance with the invention; and
Figure 4 schematically illustrates the messages communicated for a proximity request to be effected in accordance with an embodiment of the invention.

### Detailed Description of Preferred Embodiments

Before discussing specific embodiments in detail, the following general concepts are outlined. Firstly, the AS 30 can be used to check that the ProSe Function is not abusing the Proximity Request procedure by means of a Map Request. Secondly, a cryptographic signature can be used in the exchange between the ProSe Function of one PLMN and the ProSe Function of another PLMN to confirm that the Proximity Request procedure is not being abused. This can be achieved using a cryptographic signature that originates at the UE (for instance, with a key that is shared with the AS), using a cryptographic signature that originates at the AS or both. The cryptographic signature (or cryptographic signatures) can be checked at the ProSe Function of the other PLMN to confirm that it has originated with the UE or AS. Specific embodiments are now described.

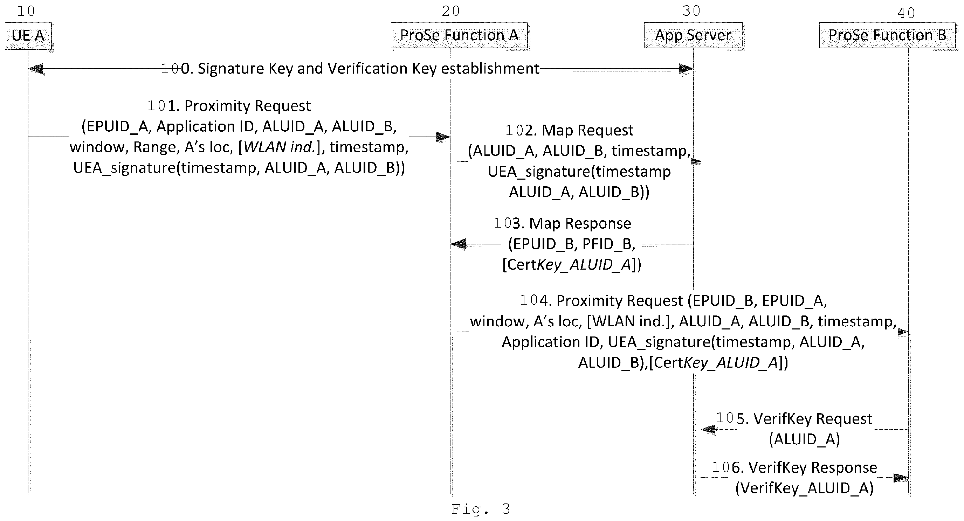

Referring now to Figure 3, there is shown a schematic illustration of the messages communicated for a proximity request to be effected in an example not in accordance with the invention. Where the same features are shown as in previous drawings, identical reference numerals have been used.

This approach uses a UE-signed proximity request. UE A 10 signs all the proximity requests sent to its ProSe Function A over the PC3 interface. The signature key for UE A 10 can be provided by the Application Server 30 over the PC1 interface. Alternatively, the UE A 10 could generate a signature and verification key pair, securely stores the signature key in its memory and export the verification key to the Application Server 30.

The UE's verification key is provided to ProSe Function B 40 by the Application Server 30 over the PC2 interface. ProSe Function B 40 is assured of the authenticity of the proximity request received from ProSe Function A 20 over the PC6 interface by verifying a cryptographic signature with a verification key from the UE A 10.

It should be noted that the ProSe Application Server 30 may be outside of one or both PMLN A and PLMN B. Thus, with reference to Figure 1, it is easier to consider the first AS 31 and second AS 32 as a single AS 30. Then, the PC1 interface is maintained at each respective UE and each PC2 interface is maintained to each respective ProSe function from the same entity. Effectively, first AS 31 and second AS 32 can be combined.

The procedure shown in Figure 3 will now be described, with reference to the Proximity Request procedure in clause 5.5.5 of 3GPP TS 23.303 v.12.0.0 to support authenticity of the request.

In step 100, UE A 10 and the Application Server 30 perform a key establishment "ceremony", which results in a signature key stored in UE A 10 and a verification key in the Application Server 30. The communication between UE A 10 and the Application Server 30 is end-to-end secured over the PC1 interface.

In step 101, the UE A 10 sends as part of the Proximity Request the following additional data: a signature (UEA_signature) of the cryptographic hash of the concatenation of the EPUID_A, the ALUID_A, the ALUID_B and a timestamp value to ProSe Function A 20. These should therefore be transmitted to the Application Server 30 and the ProSe function B 40 so that both may verify the cryptographic signature with the verification key for UE A 10. The timestamp value corresponds to the system time of UE A 10.

Next follows step 102. The ProSe Function A 20 sends as part of the Map Request message the following additional data: the UEA_signature and the timestamp provided by UE A to the Application Server 30.

Step 103 provides that the Application Server 30 verifies the UEA_signature with the verification key associated with ALUID_A. An error message is returned if the verification fails. If the verification is successful, a Map Response is sent (as in the conventional technique) and the Application Server 30 may optionally add in the Map Response the associated certificate of ALUID_A's verification key.

Then in step 104, the ProSe Function A 20 sends as part of the Proximity Request to ProSe Function B 40, the following additional data: the UEA_signature, ALUID_A, ALUID_B and the timestamp, the Application ID and optionally the certificate associated with ALUID_A.

Optionally in step 105, if the certificate associated with ALUID_A or verification key was not part of the Proximity request, the ProSe Function B 40 sends a Verification Key fetching request to the Application Server 30 (identifiable from its Application ID) for the verification key associated with ALUID_A. Subsequently, the Application Server 30 returns the verification key associated with ALUID_A in step 106.

Whether or not steps 105 and 106 take place, if the verification of UEA_signature is successful, then the procedure continues the procedure from step 5 in clause 5.5.5 of 3GPP TS 23.303 v.12.0.0 (as discussed above).

Thus, this approach provides a means of assuring the authenticity of the proximity request received at an initiating ProSe function from another ProSe Function by verifying a cryptographic signature with a verification key from UE within the initiating PMLN, that is the UE signs the proximity request.

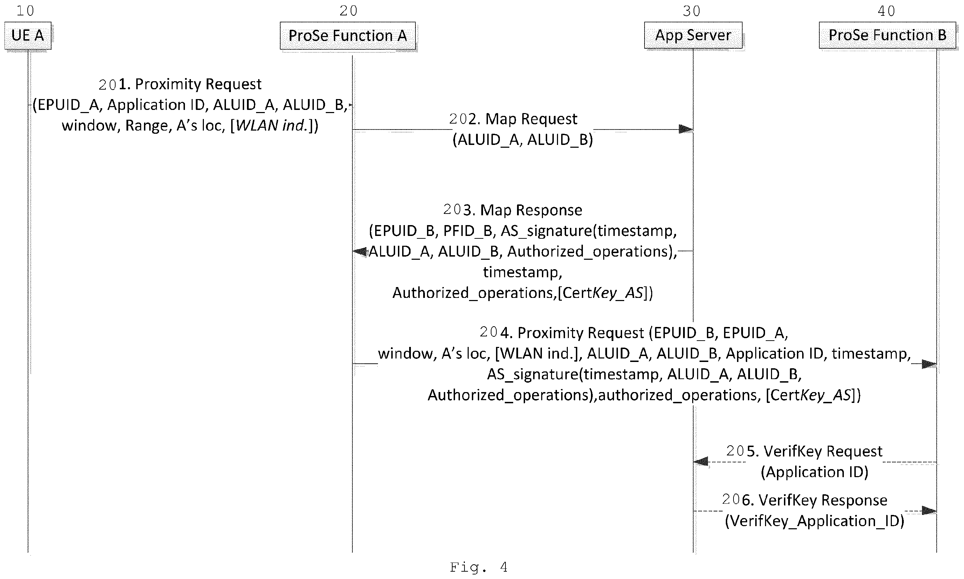

Referring now to Figure 4, there is shown a schematic illustration of the messages communicated for a proximity request to be effected in accordance with the invention. Again, where the same features are shown as in previous drawings, identical reference numerals have been used.

This approach uses an Application Server-signed proximity request. In this approach, UE A 10 does not sign the proximity requests sent to its ProSe Function A 20, but trusts the Application Server 30 to control the authorization of the proximity request sent on its behalf.

The AS 30 therefore determines whether and the extent to which the ProSe Function A 20 can make Proximity Requests. The authorization criteria can be based, for example, on detection mechanisms of very high volume of incoming proximity requests from a ProSe Function that does not match with the frequency usage of the ProSe Application by the users, it can be based on a presence detection mechanism over the PC1 interface, or a combination of these possibly with other factors.

The ProSe Function A 20 requests an authorization from the Application Server 30 for each proximity request it should transmit over the PC2 interface. The Application Server 30 returns a parameter which specifies the operations that are authorized (for example, authorized to send only one request, authorized to send a specific number of requests until a particular date or similar). A signature is also provided by the AS 30 in the Map Response. The ProSe Function B 40 is assured of the authenticity of the proximity request received from the ProSe Function A 20 by verifying the signature with a verification key from the Application server 30. The token verification key is fetched over the PC2 interface between the ProSe Function B 40 and the Application Server 30.

The procedure shown in Figure 4 will now be described, with reference to the Proximity Request procedure in clause 5.5.5 of 3GPP TS 23.303 v.12.0.0 to support authenticity of the request.

Step 201 is the same as step 1 of the procedure in clause 5.5.5 of 3GPP TS 23.303 v.12.0.0 and step 202 is the same as step 2 of the procedure in clause 5.5.5 of 3GPP TS 23.303 v.12.0.0.

In step 203, the Application Server 30 returns as part of the Map Response the following additional data: the authorized operations (for example, authorized to send only one request, authorized to send X requests until particular date, etc.); a timestamp; the signature (AS_signature) of the cryptographic hash of the concatenation of the ALUID_A, the ALUID_B, the authorized operations and the timestamp value; and optionally the associated certificate CertKey_AS of Application Server's verification key.

Next in step 204, the ProSe Function A 20 sends as part of the Proximity Request to the ProSe Function B 40 the following additional data: the AS_signature; ALUID_A; ALUID_B; the timestamp; the authorized operations; the Application ID; and optionally the certificate CertKey_AS.

This is optionally followed by step 205 if the certificate CertKey_AS was not part of the Proximity request or if the certificate CertKey_AS or verification key were not stored in internal memory. Then, the ProSe Function B 40 sends a Verification Key fetching request to the Application Server 30 (identifiable from its Application ID) for a verification key associated with the Application ID. The Application Server 30 returns the verification key associated with Application ID in step 206.

Whether or not steps 205 and 206 take place, if the verification of AS_signature is successful, then the procedure continues from step 5 in clause 5.5.5 of 3GPP TS 23.303 v.12.0.0.

Hence, the ProSe Application Server itself is used to control the authorisation of the proximity request sent on its behalf. A second ProSe Function is assured of the authenticity of the proximity request received from a first ProSe Function by verifying a signature with a verification key from the ProSe Application server.

Although specific embodiments have now been described, the skilled person will understand that various modifications and variations are possible. Indeed, a combination of the two embodiments is possible. Moreover, only a part of a functionality described in each embodiment may need to be implemented. For example, the functionality associated with the AS 30 may be implemented, even though the functionality associated with the UE, ProSe function or both is not available.

It will be understood that the specific messages and their contents may vary. For example, the messages and cryptographic signatures need not comprise a combination or a hash of all of the information discussed above. Rather a subset of that information can be used. Additionally or alternatively, other information can be used.

It will also be understood that, wherever an entity (such as a Proximity Service Function) is described as validating a cryptographic signature, this validation computation could be offloaded to an external entity, which may be part of the cellular network or external to it.

The implementations described herein deal with the scenario when the UE A 10 (making the Proximity Request) and the UE B 60 (the target or subject of the Proximity Request) are both in their Home PLMN. However, it will be recognised that if either are roaming (therefore in a Visited PLMN), the approach may be adapted, especially with reference to the implementations discussed in 3GPP TS 23.303 v.12.0.0.

## Claims

1. An Application Server (30) for interfacing with a cellular network, comprising:
a proximity service function interface, configured to receive a Map Request from a first Proximity Service Function (20) on behalf of a first User Equipment, UE (10); and
security logic, configured to authenticate the Map Request and, if the Map Request is authenticated, to communicate a Map Response to the first Proximity Service Function (20); and
wherein the security logic is further configured to generate an application Server cryptographic signature using a cryptographic key established at the application server and to communicate the application Server cryptographic signature together with the Map Response.

2. The Application Server of claim 1, further comprising:
a User Equipment interface, configured to establish a cryptographic key with the first UE (10), prior to receiving the Map Request; and
wherein the Map Request further comprises a cryptographic signature from the first UE (10), the security logic being configured to authenticate the Map Request by validating the cryptographic signature using the established cryptographic key.

3. The Application Server of claim 1 or claim 2, wherein the security logic is configured to authenticate the Map Request on the basis of one or more of: previous Map Requests received from the first Proximity Service Function (20); and a presence detection for the first UE (10) at the Application Server.

4. The Application Server of any preceding claim, wherein the proximity service function interface is further configured to receive a Key Fetching Request from a second Proximity Service Function (40) and to send at least part of the established cryptographic key to the second Proximity Service Function in response to the received Key Fetching Request.

5. The Application Server of any preceding claim, wherein the security logic is further configured to communicate at least part of the established cryptographic key with the Map response.

6. A Proximity Service Function (20) for a cellular network, comprising:
a User Equipment interface, configured to receive a first Proximity Request from a first User Equipment, UE (10);
an Application Server interface, configured to send a Map Request to an Application Server (30), in response to the received first Proximity Request and to receive a Map Response including an Application Server cryptographic signature from the Application Server, wherein the Application Server cryptographic signature is generated using a cryptographic key established at the application server; and
a Proximity Service Function interface, configured to send a second Proximity Request to another Proximity Service Function (40) based on the first Proximity Request and the Map Response, the second Proximity Request comprising the Application Server cryptographic signature that is based on the first Proximity Request to allow the other Proximity Service Function (40) to authenticate the second Proximity Request.

7. The Proximity Service Function of claim 6, wherein the User Equipment interface is configured to receive a UE cryptographic signature from the first UE (10), wherein the Application Server interface is further configured to send the UE cryptographic signature to the Application Server (30) and wherein the second Proximity Request sent by the Proximity Service Function interface comprises the UE cryptographic signature.

8. The Proximity Service Function of claim 6 or claim 7, wherein the Application Server interface is further configured to receive at least part of the cryptographic key established at the Application Server.

9. A Proximity Service Function (40) for a cellular network, comprising:
a Proximity Service Function interface, configured to receive a Proximity Request from another Proximity Service Function (20) on behalf of a first User Equipment, UE (10), the Proximity Request comprising an application Server cryptographic signature and identifying an Application Server (30) associated with the Proximity Request;
an Application Server interface, configured to send a Key Fetching Request to the identified Application Server (30), in response to the received Proximity Request and to receive a cryptographic key from the Application Server (30) in response; and
security logic, configured to validate the application Server cryptographic signature and authenticate the received Proximity Request thereby; and
wherein the security logic is configured to validate the application Server cryptographic signature using the received cryptographic key.

10. A method of handling a Proximity Request within a cellular network, comprising:
communicating a Map Request from the Proximity Service Function (20) to an Application Server (30), in response to a first Proximity Request on behalf of a first User Equipment, UE; and
communicating a Map Response from the Application Server (30) to the Proximity Service Function (20), in response to the Map Request; and
wherein the Map Response comprises a cryptographic signature generated at the Application Server using a cryptographic key established at the Application Server to allow authentication of the first Proximity Request.

11. The method of claim 10, wherein the step of communicating the Map Response comprises communicating the cryptographic signature from the application Server (30) to the Proximity Service Function (20); and
the method further comprising:
communicating a second Proximity Request from the first Proximity Service Function (20) to a second Proximity Service Function (40) based on the first Proximity Request and the Map Response, the second Proximity Request comprising the cryptographic signature from the Application Server (30).

12. The method of claim 11, further comprising communicating a Key Fetching Request from the second Proximity Service Function (40) to the Application Server (30) in response to the second Proximity Service Request and communicating a cryptographic key from the Application Server to the second Proximity Server in response to the Key Fetching Request.

13. The method of any one of claims 10 to 13, further comprising communicating at least part of the established cryptographic key from the Application Server with the Map response.

14. A computer program, configured to carry out the method of any one of claims 10 to 13 when operated by a processor.

## Patentansprüche

1. Ein Anwendungsserver (30) zum Bilden einer Schnittstelle mit einem Mobilfunknetz, beinhaltend:
eine Proximitätsdienstfunktionsschnittstelle, die konfiguriert ist, um eine Zuordnungsanfrage von einer ersten Proximitätsdienstfunktion (20) im Auftrag eines ersten Benutzergeräts, UE (User Equipment), (10) zu empfangen; und
eine Sicherheitslogik, die konfiguriert ist, um die Zuordnungsanfrage zu authentifizieren, und um, falls die Zuordnungsanfrage authentifiziert wird, eine Zuordnungsantwort an die erste Proximitätsdienstfunktion (20) zu kommunizieren; und
wobei die Sicherheitslogik ferner konfiguriert ist, um eine kryptografische Signatur für den Anwendungsserver unter Verwendung eines kryptografischen Schlüssels, der am Anwendungsserver festgelegt wird, zu generieren und um die kryptografische Signatur für den Anwendungsserver zusammen mit der Zuordnungsantwort zu kommunizieren.

2. Anwendungsserver gemäß Anspruch 1, ferner beinhaltend:
eine Benutzergerätschnittstelle, die konfiguriert ist, um, vor dem Empfangen der Zuordnungsanfrage, einen kryptografischen Schlüssel mit dem ersten UE (10) festzulegen; und
wobei die Zuordnungsanfrage ferner eine kryptografische Signatur von dem ersten UE (10) beinhaltet, wobei die Sicherheitslogik konfiguriert ist, um die Zuordnungsanfrage durch Validieren der kryptografischen Signatur unter Verwendung des festgelegten kryptografischen Schlüssels zu authentifizieren.

3. Anwendungsserver gemäß Anspruch 1 oder Anspruch 2, wobei die Sicherheitslogik konfiguriert ist, um die Zuordnungsanfrage auf der Basis von einem oder mehreren von Folgendem zu authentifizieren: früheren Zuordnungsanforderungen, die von der ersten Proximitätsdienstfunktion (20) empfangen wurden; und einer Anwesenheitsdirektion für das erste UE (10) am Anwendungsserver.

4. Anwendungsserver gemäß einem vorhergehenden Anspruch, wobei die Proximitätsdienstfunktionsschnittstelle ferner konfiguriert ist, um eine Schlüsselholanfrage von einer zweiten Proximitätsdienstfunktion (40) zu empfangen und als Antwort auf die empfangene Schlüsselholanfrage mindestens einen Teil des festgelegten kryptografischen Schlüssels an die zweite Proximitätsdienstfunktion zu senden.

5. Anwendungsserver gemäß einem vorhergehenden Anspruch, wobei die Sicherheitslogik ferner konfiguriert ist, um mindestens einen Teil des festgelegten kryptografischen Schlüssels mit der Zuordnungsantwort zu kommunizieren.

6. Eine Proximitätsdienstfunktion (20) für ein Mobilfunknetz, beinhaltend:
eine Benutzergerätschnittstelle, die konfiguriert ist, um eine erste Proximitätsanfrage von einem ersten Benutzergerät, UE, (10) zu empfangen;
eine Anwendungsserverschnittstelle, die konfiguriert ist, um eine Zuordnungsanfrage an einen Anwendungsserver (30) zu senden, als Antwort auf die empfangene erste Proximitätsanfrage, und um eine Zuordnungsantwort, die eine kryptografische Signatur für den Anwendungsserver umfasst, von dem Anwendungsserver zu erhalten, wobei die kryptografische Signatur für den Anwendungsserver unter Verwendung eines kryptografischen Schlüssels, der am Anwendungsserver festgelegt wird, generiert wird; und
eine Proximitätsdienstfunktionsschnittstelle, die konfiguriert ist, um eine zweite Proximitätsanfrage basierend auf der ersten Proximitätsanfrage und der Zuordnungsantwort an eine andere Proximitätsdienstfunktion (40) zu senden, wobei die zweite Proximitätsanfrage die kryptografische Signatur für den Anwendungsserver beinhaltet, die auf der ersten Proximitätsanfrage basiert, um der anderen Proximitätsdienstfunktion (40) zu erlauben, die zweite Proximitätsanfrage zu authentifizieren.

7. Proximitätsdienstfunktion gemäß Anspruch 6, wobei die Benutzergerätschnittstelle konfiguriert ist, um eine kryptografische Signatur für das UE von dem ersten UE (10) zu empfangen, wobei die Anwendungsserverschnittstelle konfiguriert ist, um die kryptografische Signatur für das UE an den Anwendungsserver (30) zu senden, und wobei die zweite Proximitätsanfrage, die von der Proximitätsdienstfunktionsschnittstelle gesendet wurde, die kryptografische Signatur für das UE beinhaltet.

8. Proximitätsdienstfunktion gemäß Anspruch 6 oder Anspruch 7, wobei die Anwendungsserverschnittstelle ferner konfiguriert ist, um mindestens einen Teil des kryptografischen Schlüssels, der am Anwendungsserver festgelegt wird, zu empfangen.

9. Eine Proximitätsdienstfunktion (40) für ein Mobilfunknetz, beinhaltend:
eine Proximitätsdienstfunktionsschnittstelle, die konfiguriert ist, um eine Proximitätsanfrage von einer anderen Proximitätsdienstfunktion (20) im Auftrag eines ersten Benutzergeräts, UE, (10) zu empfangen, wobei die Proximitätsanfrage eine kryptografische Signatur für den Anwendungsserver beinhaltet und einen Anwendungsserver (30) identifiziert, der mit der Proximitätsanfrage assoziiert ist;
eine Anwendungsserverschnittstelle, die konfiguriert ist, um eine Schlüsselholanfrage an den identifizierten Anwendungsserver (30) zu senden, als Antwort auf die empfangene Proximitätsanfrage, und um als Antwort einen kryptografischen Schlüssel von dem Anwendungsserver (30) zu empfangen; und
eine Sicherheitslogik, die konfiguriert ist, um die kryptografische Signatur für den Anwendungsserver zu validieren und damit die Proximitätsanfrage zu authentifizieren; und
wobei die Sicherheitslogik konfiguriert ist, um die kryptografische Signatur für den Anwendungsserver unter Verwendung des empfangenen kryptografischen Schlüssels zu validieren.

10. Ein Verfahren zum Handhaben einer Proximitätsanfrage innerhalb eines Mobilfunknetzes, beinhaltend
Kommunizieren einer Zuordnungsanfrage von der Proximitätsdienstfunktion (20) an einen Anwendungsserver (30), als Antwort auf eine erste Proximitätsanfrage im Auftrag eines ersten Benutzergeräts, UE; und
Kommunizieren einer Zuordnungsantwort von dem Anwendungsserver (30) an die Proximitätsdienstfunktion (20), als Antwort auf die Zuordnungsanfrage; und
wobei die Zuordnungsantwort eine kryptografische Signatur beinhaltet, die am Anwendungsserver unter Verwendung eines kryptografischen Schlüssels, der am Anwendungsserver festgelegt wird, generiert wird, um eine Authentifizierung der ersten Proximitätsanfrage zu erlauben.

11. Verfahren gemäß Anspruch 10, wobei der Schritt des Kommunizierens der Zuordnungsantwort das Kommunizieren der kryptografischen Signatur von dem Anwendungsserver (30) an die Proximitätsdienstfunktion (20) beinhaltet; und
das Verfahren ferner beinhaltend:
Kommunizieren einer zweiten Proximitätsanfrage von der ersten Proximitätsdienstfunktion (20) an eine zweite Proximitätsdienstfunktion (40) basierend auf der ersten Proximitätsanfrage und der Zuordnungsantwort, wobei die zweite Proximitätsanfrage die kryptografische Signatur von dem Anwendungsserver (30) beinhaltet.

12. Verfahren gemäß Anspruch 11, ferner beinhaltend Kommunizieren einer Schlüsselholanfrage von der zweiten Proximitätsdienstfunktion (40) an den Anwendungsserver (30) als Antwort auf die zweite Proximitätsdienstfunktion und Kommunizieren eines kryptografischen Schlüssels von dem Anwendungsserver an den zweiten Proximitätsserver als Antwort auf die Schlüsselholanfrage.

13. Verfahren gemäß einem der Ansprüche 10 bis 13, ferner beinhaltend Kommunizieren von mindestens einem Teil des festgelegten kryptografischen Schlüssels von dem Anwendungsserver mit der Zuordnungsantwort.

14. Ein Computerprogramm, das konfiguriert ist, um das Verfahren gemäß einem der Ansprüche 10 bis 13 auszuführen, wenn es von einem Prozessor betrieben wird.

## Revendications

1. Un serveur d'applications (30) destiné à un interfaçage avec un réseau cellulaire, comprenant :
une interface de fonction de service de proximité configurée de façon à recevoir une demande de carte à partir d'une première fonction de service de proximité (20) au nom d'un premier équipement d'utilisateur, UE (10), et
une logique de sécurité configurée de façon à authentifier la demande de carte et, si la demande de carte est authentifiée, de façon à communiquer une réponse de carte à la première fonction de service de proximité (20), et
où la logique de sécurité est configurée en outre de façon à générer une signature cryptographique de serveur d'applications au moyen d'une clé cryptographique établie au niveau du serveur d'applications et à communiquer la signature cryptographique de serveur d'applications conjointement avec la réponse de carte.

2. Le serveur d'applications selon la Revendication 1, comprenant en outre :
une interface d'équipement d'utilisateur configurée de façon à établir une clé cryptographique avec le premier UE (10) avant la réception de la demande de carte, et
où la demande de carte comprend en outre une signature cryptographique provenant du premier UE (10), la logique de sécurité étant configurée de façon à authentifier la demande de carte par la validation de la signature cryptographique au moyen de la clé cryptographique établie.

3. Le serveur d'applications selon la Revendication 1 ou 2, où la logique de sécurité est configurée de façon à authentifier la demande de carte sur la base d'un ou de plusieurs éléments parmi : des demandes de carte antérieures reçues de la première fonction de service de proximité (20) et une détection de présence pour le premier UE (10) au niveau du serveur d'applications.

4. Le serveur d'applications selon l'une quelconque des Revendications précédentes, où l'interface de fonction de service de proximité est configurée en outre de façon à recevoir une demande de recherche de clé à partir d'une deuxième fonction de service de proximité (40) et à envoyer au moins une partie de la clé cryptographique établie à la deuxième fonction de service de proximité en réponse à la demande de recherche de clé reçue.

5. Le serveur d'applications selon l'une quelconque des Revendications précédentes, où la logique de sécurité est configurée en outre de façon à communiquer au moins une partie de la clé cryptographique établie avec la réponse de carte.

6. Une fonction de service de proximité (20) destinée à un réseau cellulaire, comprenant :
une interface d'équipement d'utilisateur configurée de façon à recevoir une première demande de proximité à partir d'un premier équipement d'utilisateur, UE (10),
une interface de serveur d'applications configurée de façon à envoyer une demande de carte à un serveur d'applications (30) en réponse à la première demande de proximité reçue et à recevoir une réponse de carte comprenant une signature cryptographique de serveur d'applications à partir du serveur d'applications, où la signature cryptographique de serveur d'applications est générée au moyen d'une clé cryptographique établie au niveau du serveur d'applications, et
une interface de fonction de service de proximité configurée de façon à envoyer une deuxième demande de proximité à une autre fonction de service de proximité (40) en fonction de la première demande de proximité et de la réponse de carte, la deuxième demande de proximité comprenant la signature cryptographique de serveur d'applications qui est basée sur la première demande de proximité de façon à permettre à l'autre fonction de service de proximité (40) d'authentifier la deuxième demande de proximité.

7. La fonction de service de proximité selon la Revendication 6, où l'interface d'équipement d'utilisateur est configurée de façon à recevoir une signature cryptographique d'UE à partir du premier UE (10), où l'interface de serveur d'applications est configurée en outre de façon à envoyer la signature cryptographique d'UE au serveur d'applications (30) et où la deuxième demande de proximité envoyée par l'interface de fonction de service de proximité comprend la signature cryptographique d'UE.

8. La fonction de service de proximité selon la Revendication 6 ou 7, où l'interface de serveur d'applications est configurée en outre de façon à recevoir au moins une partie de la clé cryptographique établie au niveau du serveur d'applications.

9. Une fonction de service de proximité (40) destinée à un réseau cellulaire, comprenant :
une interface de fonction de service de proximité configurée de façon à recevoir une demande de proximité à partir d'une autre fonction de service de proximité (20) au nom d'un premier équipement d'utilisateur, UE (10), la demande de proximité comprenant une signature cryptographique de serveur d'applications et l'identification d'un serveur d'applications (30) associé à la demande de proximité,
une interface de serveur d'applications configurée de façon à envoyer une demande de recherche de clé au serveur d'applications identifié (30) en réponse à la demande de proximité reçue et à recevoir une clé cryptographique à partir du serveur d'applications (30) en réponse, et
une logique de sécurité configurée de façon à valider la signature cryptographique de serveur d'applications et à ainsi authentifier la demande de proximité reçue, et
où la logique de sécurité est configurée de façon à valider la signature cryptographique de serveur d'applications au moyen de la clé cryptographique reçue.

10. Un procédé de gestion d'une demande de proximité à l'intérieur d'un réseau cellulaire, comprenant :
la communication d'une demande de carte à partir de la fonction de service de proximité (20) à un serveur d'applications (30) en réponse à une première demande de proximité au nom d'un premier équipement d'utilisateur, UE, et
la communication d'une réponse de carte provenant du serveur d'applications (30) à la fonction de service de proximité (20) en réponse à la demande de carte, et
où la réponse de carte comprend une signature cryptographique générée au niveau du serveur d'applications au moyen d'une clé cryptographique établie au niveau du serveur d'applications de façon à permettre une authentification de la première demande de proximité.

11. Le procédé selon la Revendication 10, où l'opération de communication de la réponse de carte comprend la communication de la signature cryptographique à partir du serveur d'applications (30) à la fonction de service de proximité (20), et
le procédé comprenant en outre :
la communication d'une deuxième demande de proximité à partir de la première fonction de service de proximité (20) à une deuxième fonction de service de proximité (40) en fonction de la première demande de proximité et de la réponse de carte, la deuxième demande de proximité comprenant la signature cryptographique provenant du serveur d'applications (30).

12. Le procédé selon la Revendication 11, comprenant en outre la communication d'une demande de recherche de clé à partir de la deuxième fonction de service de proximité (40) au serveur d'applications (30) en réponse à la deuxième demande de service de proximité et la communication d'une clé cryptographique à partir du serveur d'applications au deuxième serveur de proximité en réponse à la demande de recherche de clé.

13. Le procédé selon l'une quelconque des Revendications 10 à 13, comprenant en outre la communication d'au moins une partie de la clé cryptographique établie à partir du serveur d'applications avec la réponse de carte.

14. Un programme informatique configuré de façon à exécuter le procédé selon l'une quelconque des Revendications 10 à 13 lorsqu'il est actionné par un processeur.
